# EUROPEAN PATENT SPECIFICATION

(11) **EP 0 694 363 B1**
(45) Date of publication and mention of the grant of the patent: **07.07.1999**
(21) Application number: 95901594.2
(22) Date of filing: 25.11.1994
(51) Int. Cl.: B23Q 11/12

(54) **MACHINE TOOL HAVING TWO REVERSIBLE SPINDLES**
WERKZEUGMASCHINE MIT ZWEI REVERSIBLEN SPINDELN
MACHINE-OUTIL A DEUX BROCHES REVERSIBLES

(30) Priority: 15.02.1994 JP 1815394
(43) Date of publication of application: 31.01.1996
(73) Proprietor: SEIKO SEIKI KABUSHIKI KAISHA, Narashino-shi, Chiba 275 (JP)
(72) Inventor: KAJIURA, Katsuhiro, Narashino-shi, Chiba 275 (JP)
(74) Representative: Fleuchaus, Leo, Dipl.-Ing.
(86) International application number: PCT/JP94/01988
(87) International publication number: WO 95/21723

(56) References cited:
- DE-A- 3 200 937
- GB-A- 2 193 452
- JP-A- 58 193 926

## Description

The present invention relates to a machine tool having two revolvable spindles according to the preamble of claim 1, such a machine tool is known from DE-A-32 00 937. In particular, it relates to an internal grinding machine, etc., capable of sufficiently cooling a work spindle and thus providing accuracy for shaping work pieces stably and without any changes in the lapse of time.

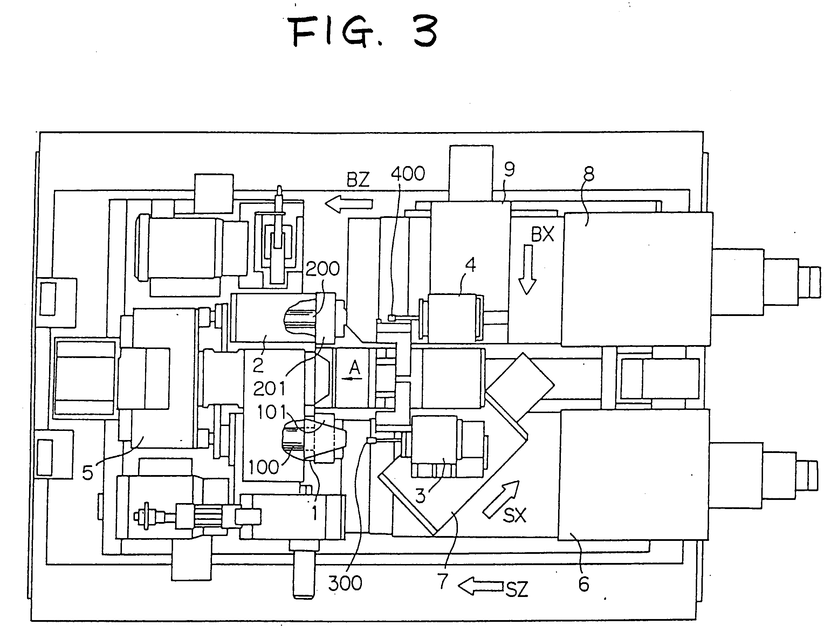

As shown in Fig. 3, a known machine tool of this type is an internal grinding machine equipped with two work spindle stocks 1 and 2 and wheel spindle stocks 3 and 4 (this type is called a simultaneous double spindle internal grinding machine). The work spindle stocks 1 and 2 are provided with revolvable work spindles 100 and 200 respectively having chucks 101 and 201 on their tip parts for setting work pieces and arranged in parallel.

One wheel spindle stock 3 is provided with a first grinding wheel 300 and the other wheel spindle stock 4 is provided with a second grinding wheel 400. The first grinding wheel 300 is placed opposed to the tip of one work spindle 100 and the wheel spindle stock 3 is attached to a built-in rotary shaft with a quill while the second grinding wheel 400 is placed opposed to the tip of the other work spindle 200 and the wheel spindle stock 4 is attached to the built-in rotary shaft with the quill.

Both work spindle stocks 1 and 2 are attached to an index unit 5 for revolving (180°) the work spindles 100 and 200 of both work spindle stocks 1 and 2 against each other and by this revolving movement, the tip of one work spindle 100 opposed to the first grinding wheel 300 is placed opposed to the second grinding wheel 400 and the tip of the other work spindle 200 opposed to the second grinding wheel 400 is placed opposed to the first grinding wheel 300.

One wheel spindle stock 3 is constructed by an SZ table 6 movable in an SZ direction and an SX table movable in an SX direction and the other wheel spindle stock 4 is constructed by a BZ table 8 movable in a BZ direction and a BX table 9 movable in a BX direction so as to be moved in these directions as indicated by arrows in figure. Angles for the BX and SX tables 9 and 7 can be optionally set against the BZ and SZ directions.

The internal grinding machine of this type allows simultaneous grindings by the first and second grinding wheels 300 and 400. In particular, only by the revolving movement of the index unit 5, after pieces to be worked set on one work spindle 100 are ground by the first grinding wheel 300, they can be ground again by the second grinding wheel 400 without any setting changes, resulting in one chucking work necessary for both grindings. Thus, it is a suitable machine for grinding pieces requiring highly accurate concentricity on two parts to be ground, e.g., a fuel injection nozzle having a hole part and a conical part on its tip.

Further, when the respective work spindles 100 and 200 are expanded by heat generated during grindings by the first and second grinding wheels 300 and 400, a grinding position (the position of the first or the second grinding wheel 300 or 400 against one work spindle 100, or against the other work spindle 200) is changed and thereby grinding accuracy is adversely affected. Thus, when work pieces are ground by the first and second grinding wheels 300 and 400, both work spindles 100 and 200 are cooled by spraying coolant on the outer peripheral frames thereof from the upper sides.

In the internal grinding machine of the conventional type mentioned above, a means adopted for cooling both work spindles 100 and 200 is the one by which coolant is sprayed on their outer peripheral frames from above. However, this is not a good means to sufficiently cool the work spindles 100 and 200 in that not many parts thereof are directly sprayed by coolant meaning small cooled areas and besides, there exist bearings for the work spindles 100 and 200 within their outer peripheral frames and bearings for revolving movement of the index unit there within as heat sources.

For this reason, various problems occur, such as the gradual increase in temperature of the work spindles 100 and 200 leading to the gradual expansion thereof, the shifts in the grinding positions (of the first grinding wheel 300 against one work spindle 100, etc.) due to the expansion, changed and thus unstable accuracy for shaping work pieces with the lapse of time and the like.

The present invention is made based on such a background and its object is to provide a machine tool having two revolvable spindles, e.g., an internal grinding machine capable of sufficiently cooling the work spindles and thus providing accuracy for shaping workpieces stably even with the lapse of time.

In order to achieve the object mentioned above, the present invention offers a machine tool having two revolvable work spindles arranged in parallel with work pieces to be set on their tip parts, a first tool placed opposed to the tip of one work spindle, a second tool placed opposed to the other work spindle and a means for revolving both work spindles and thereby placing the tip of one work spindle opposed to the second tool and the tip of the other work spindle opposed to the first tool; characterised in that cooling jackets arranged on the outer peripheral surfaces of the work spindles and to be supplied with coolant, pairs of inlet/outlet integrally revolvable integrally with both of the work spindles and arranged on opposing positions with respect to the center shaft line of revolution, connection pipes connected from one of these pairs of inlet/outlet through the cooling jackets to the other pair of inlet/outlet and a coolant supplying means for supplying coolant to one or the other of said pairs of inlet/outlet are provided.

According to the present invention, coolant supplied by the coolant supplying means passes from one inlet/outlet through the cooling jacket to the other inlet/outlet before revolution by the revolving means, and after revolution coolant reversely passes from the other inlet/outlet through the cooling jacket to the one inlet/outlet.

Further, coolant flowing in the above-mentioned manner can directly cool the work spindles and such heat sources as the bearings thereof and the like when passing through the cooling jacket, irrespective of whether it is flowing before or after revolution by the revolving means.

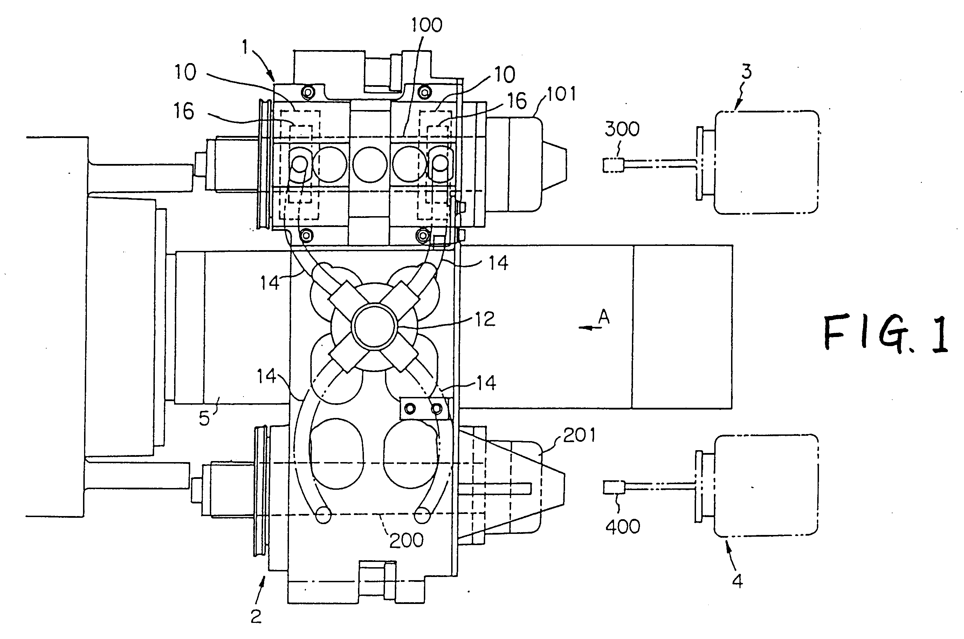

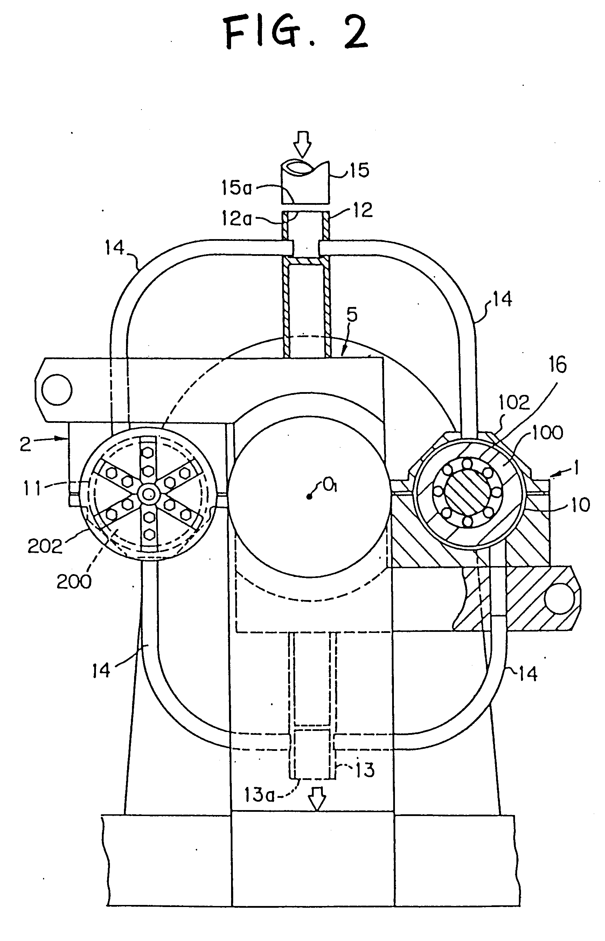

Fig. 1 is a top view showing the major parts of an internal grinding machine as a suitable machine tool having two revolvable spindles. Fig. 2 is a drawing of an A arrow shown in Fig. 1 (As for the work spindle 100, it shows the section of a bearing part 16). Fig. 3 is a top view showing a known internal grinding machine.

Preferred embodiment of the internal grinding machine as a machine tool having two revolvable spindles according to the present invention will be described in detail with reference to the accompanying drawings.

Basic construction of the internal grinding machine shown in Fig. 1 is similar to that of the conventional type; wherein for example, two work spindle stocks 1 and 2 and wheel spindle stocks 3 and 4 are provided, the work spindle stocks 1 and 2 are provided with work spindles 100 and 200 respectively, both work spindles 100 and 200 are arranged in parallel, one wheel spindle stock 3 is provided with a first grinding wheel 300 and the other wheel spindle stock 4 is provided with a second grinding wheel 400, initially the first grinding wheel 300 is placed opposed to the tip of one work spindle 100 and the second grinding wheel 400 is placed opposed to the tip of the other work spindle 200 and both work spindle stocks 1 and 2 are attached to a revolving means, that is, the index unit 5 for revolving the work spindles 100 and 200 thereof. Thus, the same symbols will be used for the same members and their detailed description will be omitted.

The internal grinding machine shown in Fig. 1 is, as indicated by an arrow in Fig. 2 (However, as for the work spindle 100, it shows a section of bearing 16), is provided with cooling jackets 10 and 11 between one work spindle 100 and its outer peripheral frame 102 and between the other work spindle 200 and its outer peripheral frame 202 respectively, these cooling jackets 10 and 11 are directly placed on the outer peripheral surfaces of the work spindles 100 and 200 and annularly formed along the outside diameters of the work spindles 100 and 200 and coolant is supplied to these cooling jackets 10 and 11.

The index unit 5 is provided with pairs of inlet/outlet 12 and 13 arranged so as to be revolved integrally with both work spindles 100 and 200 and on opposing upper and lower positions with the revolution center shaft line 0₁ thereof between.

That is, this machine is constructed in such a manner that when one pair of inlet/outlet 12 is positioned on the upper side of the revolution center shaft line 0₁ of the work spindles 100 and 200, the other pair of inlet/outlet 13 is positioned lower than the line 0₁ while when the reverse is true, it is positioned upper than the line 0₁.

Connection pipes 14, 14..... are arranged on a route from one pair of inlet/outlet 12 via the cooling jackets 10 and 11 to the other pair of inlet/outlet. In other words, these connection pipes 14, 14 ... connect one inlet/outlet 12 to the cooling jackets 10 and 11 and the other inlet/outlet 13 to the cooling jackets 10 and 11 and form a flow passage from one pair of inlet/outlet 12 through the cooling jackets 10 and 11 to the other pair of inlet/outlet 13.

A coolant supplying pipe 15 is arranged on the extension line of one pair of inlet/outlet 12 or the other pair of inlet/outlet 13 as a means of supplying coolant and the supplying port 15a of this coolant supplying pipe 15 is placed opposed to the opening end 12a of one pair of inlet/outlet 12 initially. However, when the pairs of inlet/outlet 12 and 13 are integrally revolved with the work spindles 100 and 200 by the revolving movement of the index unit 5, it is placed opposed to the opening end 13a of the other pair of inlet/outlet 13.

Description of the operation of the internal grinding machine constructed in the above-mentioned manner will follow with reference to Figs. 1 and 2.

According to this internal grinding machine, when work pieces set on one work spindle 100 are ground by the first grinding wheel 300 or work pieces set on the other work spindle 200 are ground by the second grinding wheel 400, coolant is supplied from the coolant supplying pipe 15 to one pair of inlet/outlet 12.

Coolant supplied to one pair of inlet/outlet 12 as mentioned above is flown through the connection pipes 14, 14 to the cooling jackets 10 and 11. At this time the work spindles 100 and 200 are directly cooled and then the vicinity of heat sources such as the bearings 16 of the work spindles 100 and 200 and the like is cooled, as well. After this, coolant is flown from the cooling jackets 10 and 11 through the connection pipes 14, 14 to the other pair of inlet/outlet 13 and discharged therefrom.

Further, when grindings by the first and second grinding wheels 300 and 400 are complete and the index unit 5 is operated, the work spindles 100 and 200 of both work spindle stocks 1 and 2 are revolved against each other, both pairs of inlet/outlet 12 and 13 are revolved integrally with these revolutions, and thereby the positions of these pairs of inlet/outlet 12 and 13 are made reverse. The period of time needed for the revolutions is about 0.5 second.

In this way, work pieces set on one work spindle 100 can be ground by the second grinding wheel 400 while those set on the other work spindle 200 can be ground by the first grinding wheel 300, the supplying port 15a of the coolant supplying pipe 15 and the opening end 13a of the other pair of inlet/outlet 13 are placed opposed to each other and thereby coolant can be supplied from the coolant supplying pipe 15 to the other pair of inlet/outlet 13. Then, when work pieces set on one work spindle 100 are ground by the second grinding wheel 400 and work pieces set on the other work spindle 200 are ground by the first grinding wheel 300, coolant is supplied from the supplying port 15a of the coolant supplying pipe 15 to the other pair of inlet/outlet 13.

Coolant supplied to the other pair of inlet/outlet 13 as mentioned above is flown through the connection pipes 14, 14 to the cooling jackets 10 and 11. Similar to the above, the work spindles 100 and 200 are directly cooled and the vicinity of such heat sources as the bearings of the work spindles 100 and 200 and the like is cooled, as well. After this, coolant is flown from the cooling jackets 10 and 11 through the connection pipes 14, 14 to one pair of inlet/outlet 12 and discharged therefrom.

That is, the work spindles 100 and 200 and such heat sources as the bearings thereof and the like can be cooled by coolant passing through the cooling jackets 10 and 11 anytime, irrespective of whether it is flowing before or after the revolutions.

Further, as mentioned above, one pair of inlet/outlet 12 serving as an inlet for coolant before revolution becomes an outlet after revolution while the other pair of inlet/outlet 13 serving as an outlet for coolant before revolution becomes an inlet after revolution. Therefore, it can be understood that the pairs of inlet/outlet 12 and 13 serve both as inlets and outlets.

Thus, according to the above-mentioned embodiment of the internal grinding machine, since the work spindles and the vicinity of such heat sources as the bearings thereof are directly cooled by coolant, cooled areas can be increased and the work spindles can be sufficiently cooled.

Also, since expansion of the work spindles due to a rise in temperature can be prevented and thereby the grinding positions (of the first grinding wheel against one work spindle, etc.) can always be kept constant, accuracy for shaping work pieces can be obtained stably and without any changes in the lapse of time.

Further, according to this embodiment of the internal grinding machine, coolant supplied from the coolant supplying pipe is flown from one pair of inlet/outlet through the cooling jackets to the other pair of inlet/outlet before the revolutions of both work spindles by the index unit and reversely flown from the other pair of inlet/outlet through the cooling jackets to one pair of inlet/outlet after the revolutions. Thus, irrespective of whether it is flowing before or after the revolutions, the work spindles can be sufficiently cooled and easy to be used.

Further, since during the operation of the index unit 5 the coolant supplying port 15a and the pair of inlet/outlet 12 are not on positions opposing to each other and coolant is discharged from the inlet/outlet 12, it is predetermined that flowing of coolant from the coolant supplying pipe 15 must be stopped during such a period. In order to prevent such flowing-out of coolant, it is only necessary to provide the coolant supplying pipe 15 with a valve for stopping flowing of coolant timed with the operation of the index unit.

Still further, as for coolant, grinding liquid, water and other suitable liquids capable of cooling can be selected depending on needs.

As a preferred embodiment of the present invention, the internal grinding machine as a machine tool having two revolvable spindles and grinding wheels has been described. However, any grinding machines other than the internal grinding machine can be used if they can grind outer surfaces, end surfaces, etc. Further, by switching tools to turning tools and drills, this invention can be applied to such cutting machines as a lathe and the like.

Machine tools such as the internal grinding machine, etc., having two revolvable spindles as offered by the present invention are provided with cooling jackets arranged on outer peripheral surfaces of the work spindles and supplied with coolant as described above. Therefore, since the work spindles and the vicinity of such heat sources as the bearings thereof and the like are directly cooled by coolant supplied to the cooling jackets, cooled areas can be increased, the work spindles can be sufficiently cooled, thus expansion thereof due to a rise in temperature and shifts in grinding positions (of the first grinding wheel against one work spindle, etc.) caused by such expansion can be prevented and accuracy for shaping work pieces can be obtained stably and without any changes in the lapse of time.

Further , according to the present invention, coolant supplied form a coolant supplying means is flown from one pair of inlet/outlet through the cooling jackets to the other pair of inlet/outlet before revolution by a revolving means while it is reversely flown from the other pair of inlet /outlet through the cooling jackets to one pair of inlet/outlet after revolution. Thus, irrespective of whether coolant is flown before or after revolution, the work spindles can be sufficiently cooled as mentioned above and easy to be used.

## Claims

1. A machine tool comprising two revolvable work spindles (100, 200) arranged in parallel and on whose tip parts work pieces are settable, a first tool (300) placed opposed to the tip of one of these work spindles, a second tool (400) placed opposed to the other work spindle and a revolving means (5) for revolving both of said work spindles, thereby placing the tip of one work spindle to the second tool and that of the other work spindle to the tip of the first tool, characterised in that cooling jackets (10, 11) arranged on the outer peripheral surfaces of said work spindles to be supplied with coolant, pairs of inlet/outlet (12, 13) revolvable integrally with both of said work spindles and arranged on opposing positions with respect to the center shaft line (0₁) of revolution, connection pipes (14) connected from one of these pairs of inlet/outlet through the cooling jackets to the other pair of inlet/outlet and a coolant supplying means (15) for supplying coolant to one or the other of said pairs of inlet/outlet are provided.

2. A machine tool according to claim 1, wherein said cooling jackets are formed directly and annularly along the outer peripheral surfaces of the work spindles.

3. A machine tool according to claim 1, wherein a flow passage is formed for flowing coolant supplied from said coolant supplying means from an upper pair of inlet/outlet through upper connection pipes to the cooling jackets and further from the cooling jackets through lower connection pipes to a lower pair of inlet/outlet and discharging it therefrom.

4. A machine tool according to claim 1, wherein the cooling jackets are arranged on the outer peripheries of bearing parts (16) of the work spindles.

5. A machine tool according to claim 1, wherein the tools are grinding tools such as grinding wheels and the like or cutting tools such as turning tools and the like.

## Patentansprüche

1. Eine Werkzeugmaschine mit zwei umschaltbaren Arbeitsspindeln (100, 200), die parallel zueinander angeordnet sind und auf deren Spitzenteilen Werkstücke einsetzbar sind, wobei ein erstes Werkzeug (300) gegenüber der Spitze der einen Arbeitsspindel angeordnet ist und ein zweites Werkzeug (400) gegenüber der Spitze der anderen Arbeitsspindel angeordnet ist, und ein Mittel zum Umschalten (5) der beiden Arbeitsspindeln vorgesehen ist, um damit die Spitze der einen Arbeitsspindel gegenüber dem zweiten Werkzeug, und der Spitze der anderen Arbeitsspindel gegenüber dem ersten Werkzeug anzuordnen, dadurch gekennzeichnet, daß Kühlmäntel (10, 11) auf der äußeren Umfangsfläche der Arbeitsspindeln angeordnet sind, die mit Kühlmittel versorgt werden, Eingangs/Ausgangs-Paare (12, 13) integral mit den beiden Arbeitsspindeln umschaltbar sind und in einander gegenüberliegenden Positionen gegenüber einer Zentralwellendrehachse (0₁) angeordnet sind, wobei Verbindungsleitungen (14) von diesem einen Eingangs/Ausgangs-Paar durch den Kühlmantel zum anderen Eingangs/Ausgangs-Paar angeschlossen sind, und ein Kühlmittel-Zufuhrmittel (15) zum Zuleiten des Kühlmittels zu dem einen oder dem anderen Eingangs/Ausgangs-Paar vorgesehen ist.

2. Eine Werkzeugmaschine gemäß Anspruch 1, in der die Kühlmäntel direkt und ringförmig entlang den äußeren Umfangsflächen der Arbeitsspindeln ausgebildet sind.

3. Eine Werkzeugmaschine gemäß Anspruch 1, in der ein Durchfluß ausgebildet ist, um ein aus dem Kühlmittelzufuhrmittel eingespeistes Kühlmittel von einem oberen Eingangs/Ausgangs-Paar durch obere Verbindungsleitungen zu den Kühlmänteln und weiter von den Kühlmänteln durch untere Verbindungsleitungen zu einem unteren Eingangs/Ausgangs-Paar zu leiten und dort abzulassen.

4. Eine Werkzeugmaschine gemäß Anspruch 1, in der die Kühlmäntel auf den äußeren Umfangsflächen von Lagerteilen (16) der Arbeitsspindeln angeordnet sind.

5. Eine Werkzeugmaschine gemäß Anspruch 1, in der die Werkzeuge Schleifwerkzeuge, wie z.B. Schleifköpfe und dergl., oder Schneidwerkzeuge, wie z.B. Drehwerkzeuge und dergleichen sind.

## Revendications

1. Machine-outil comprenant deux broches porte-pièce rotatives (100, 200) arrangées de manière parallèle et sur les parties terminales desquelles des pièces à usiner peuvent être placées, un premier outil (300) étant placé à l'opposé de l'extrémité de l'une de ces broches porte-pièce, un second outil (400) étant placé à l'opposé de l'autre broche porte-pièce et des moyens rotatifs (5) destinés à faire tourner les deux broches porte-pièce, amenant de ce fait l'extrémité d'une broche porte-pièce vers le second outil et celle de l'autre broche porte-pièce vers l'extrémité du premier outil, caractérisée en ce que les chemises réfrigérantes (10, 11) arrangées sur les surfaces périphériques externes des broches porte-pièce devant être fournies en liquide de refroidissement, des paires d'entrée / sortie (12, 13) pouvant intégralement tourner avec lesdites deux broches porte-pièce et arrangées sur des positions opposées par rapport à la ligne d'arbre central (0₁) de révolution, des tuyaux de raccordement (14) connectés depuis l'une de ces paires d'entrée / sortie à travers les chemises réfrigérantes à l'autre paire d'entrée / sortie et des moyens d'alimentation en liquide de refroidissement (15) destinés à fournir du liquide de refroidissement à l'une ou l'autre desdites paires d'entrée / sortie sont fournis.

2. Machine-outil selon la revendication 1, dans laquelle lesdites chemises réfrigérantes sont formées directement et de manière annulaire le long des surfaces périphériques externes des broches porte-pièce.

3. Machine-outil selon la revendication 1, dans laquelle un passage d'écoulement est formé pour écouler le liquide de refroidissement depuis lesdits moyens d'alimentation en liquide de refroidissement depuis une paire supérieure d'entrée / sortie à travers les tuyaux de raccordement supérieurs vers les chemises réfrigérantes et ensuite depuis les chemises réfrigérantes à travers les tuyaux de raccordement inférieurs vers une paire inférieure d'entrée / sortie et le décharger de celle-ci.

4. Machine-outil selon la revendication 1, dans laquelle les chemises réfrigérantes sont arrangées sur les périphéries externes des parties de palier (16) des broches porte-pièce.

5. Machine-outil selon la revendication 1, dans laquelle les outils sont des outils de broyage tels que des meules de broyage et analogues ou des outils de découpage tels que des outils de tournage et analogues.
